# EUROPEAN PATENT APPLICATION

(11) **EP 1 270 177 A2**
(43) Date of publication of application: **02.01.2003**
(21) Application number: 02254240.1
(22) Date of filing: 18.06.2002
(51) Int. Cl.: B29C 47/20

(54) **Apparatus for manufacturing a resin tube with multiple inner conduits**

(30) Priority: 19.06.2001 KR 2001034662
(71) Applicant: Kim, Hyung Ki, Asan-city, Chungchong Nam-do 336-766 (KR); Jeon, Jung Ja, Pyungtak-city, Kyunggi-do, 451-807 (KR)
(72) Inventor: Kim, Hyung Ki, Asan-city, Chungchong Nam-do 336-766 (KR); Jeon, Jung Ja, Pyungtak-city, Kyunggi-do, 451-807 (KR)
(74) Representative: Jenkins, Peter David

(57) **Abstract**

The invention relates to a resin tube that is inevitably buried during engineering works for electrical and communication line facility. The apparatus for extruding a raw material injected via a hopper (12) through a dice consisting of inner and outer blocks to produce a resin tube comprises a first extruding unit (10) having a plurality of first dice (18) for shaping at least one inner conduit (1) installed within a circumference of a given width at a head (16) of a screw case (14); first refrigerator (20) consecutively installed in the first extruding unit, for cooling the inner conduit from the first extruding unit; a second extruding unit (30) consecutively installed next to the first refrigerator in the head (36) of the screw case (34), said second extruding unit having a containing tube for containing the plurality of the inner conduits extruded from the first extruding unit and a second dice (38) for shaping outer conduits (2) surrounding an outer circumference of the inner conduits; and a second refrigerator (40) next to the second extruding unit, said second refrigerator having a third dice (44) for shaping a wrinkle at the main wall of the outer conduits extruded through the second dice and said second refrigerator for cooling the outer conduits extruded through the second and third dice.

## Description

The invention relates generally to a resin tube that is inevitably buried during engineering works for electrical and communication line facility, and more particularly to, a resin tube having multiple inner conduits suitable for optical cable facility for multiple communications, and an apparatus for manufacturing the same.

A resin tube that is inevitably used when various engineering works such as electrical and communication line or water supply/drainage works are performed, mainly includes a resin tube of a wrinkle shape that is adequately expanded and contracted depending on variations in the ground or in the pressure within the conduit. This resin tube of a wrinkle shape is usually manufactured by means of an extruding method. An example of the extruding method will be described below. A raw material injected via a hopper is extruded to a die through a screw case, thus forming a tube molding. At this time, the material is extruded as a wrinkle shape die is molded by means of a wrinkle mold die that rotates at an outer end of the die at an adequate speed in proportion to the extruding speed.

This type of the wrinkle shape resin tube has been recently used in the engineering works of an optical cable for multiple communications. For example, multiple inner conduits are built within the resin tube of a wrinkle shape to form a dual tube, that is, multiple inner conduits having smaller outer diameter than the inner diameter of the resin tube of a wrinkle shape is built within the resin tube of a wrinkle shape having a given width and an optical able is then installed within respective inner conduits.

However, the resin tube of a wrinkle shape having these multiple inner conduits therein is manufactured by manually assembling the resin tube and the inner conduits by means of additional extruding process. Thus, the productivity is low and the quality of the product is also low. In other words, all inner conduits are manually inserted into the resin tube. At this time, when the inner conduits are inserted, they are closely inserted with the resin tube having no insertion space. Further, as the insertion length of the inner conduits is long, there need lots of time and efforts. Thus, there is a problem that the manufacturing cost is high.

The present invention is contrived to solve the above problems and an aim of the present invention is to provide an apparatus for manufacturing a resin tube having multiple inner conduits capable of increasing the productivity and being commercialized at a low expense, by integrally manufacturing a resin tube of a wrinkle shape and multiple inner conduits build in the tube in a series of extruding processes.

Another aim of the present invention is to provide a resin tube having multiple inner conduits of a good quality, by simultaneously manufacturing a plurality of inner conduits and the resin tube (outer conduits) of a wrinkle shape in which the resin tube is extruded on an outer surface of the inner conduits positioned in a regular distance within the circumference of a circle of a given width through an extruding process.

The aim of the present invention is accomplished by a resin tube that is inevitably buried during engineering works for works for electrical and communication line facility.

An apparatus of manufacturing the resin tube extrudes raw materials injected via a hopper to be a die through a screw case.

An apparatus for extruding a raw material injected via a hopper through a dice consisting of inner and outer blocks to produce a resin tube comprises a first extruding unit having a plurality of first dice for shaping at least one inner conduits installed within a circumference of a given width at a head of a screw case; first refrigerators consecutively install in the first extruding unit, for cooling the inner conduits from the first extruding unit; a second extruding unit consecutively installed next to the first refrigerator in the head of the screw case, the second extruding unit having a containing tube for containing the plurality of the inner conduits extruded from the first extruding unit and the second extruding having a second dice for shaping an outer conduits surrounding an outer circumference of the inner conduits; and a second refrigerator next to the second extruding unit, the second refrigerator having a third dice for shaping a wrinkle at the main wall of the outer conduits extruded through the second dice and the second refrigerator for cooling the outer conduits extruded through the second and third dice.

The aforementioned aspects and other features of the present invention will be explained in the following description, taken in conjunction with the accompanying drawings, wherein:
Fig. 1 is a schematic diagram of an apparatus for manufacturing a resin tube according to the present invention;
Fig. 2 is a partially extended view of the apparatus for showing a first extruding unit and a first refrigerator in Fig. 1;
Fig. 3a is a partially cross-sectional view of the apparatus for showing a first die and a head in the extruding machine in Fig. 2;
Fig. 3b is a front view of the first die in Fig. 3a;
Fig. 4 is a partially cross-sectional view of the apparatus in Fig. 1 for showing a standardization die in an inner conduit;
Fig. 5 is a partially extended view of the apparatus in Fig. 1 for showing a second extruding unit and a second refrigerator;
Fig. 6 is a partially cross-sectional view of the second extruding machine and the second refrigerator in Fig. 5; and

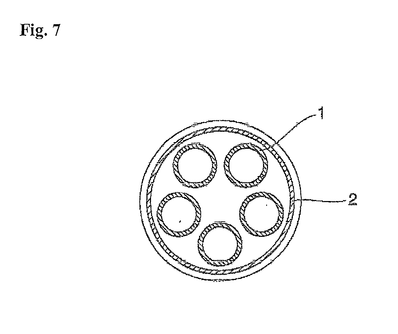

Fig. 7 is a cross-sectional of a resin material that is molded by the apparatus for manufacturing a resin tube according to the present invention.

The present invention will be described in detail by way of a preferred embodiment with reference to accompanying drawings, in which like reference numerals are used to identify the same or similar parts.

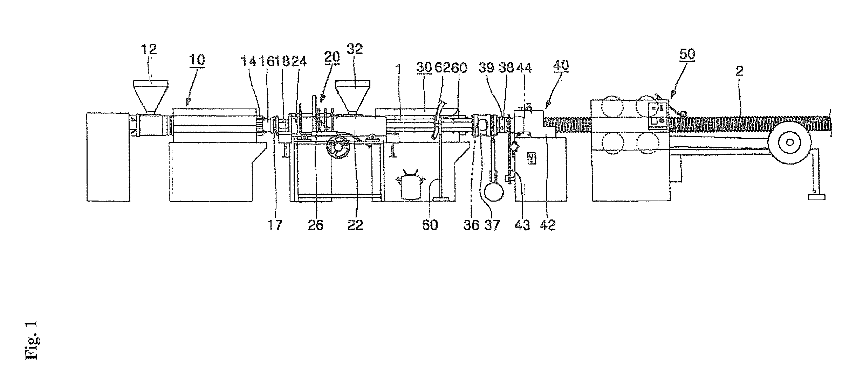

Fig. 1 is a schematic diagram of an apparatus for manufacturing a resin tube having a plurality of inner conduits according to the present invention;

The apparatus for manufacturing the resin tube mainly includes a first extruding unit 10, a second refrigerator 20, a second extruding unit 30, a second refrigerator 40 and a hoisting unit 50.

The apparatus of the present invention is characterized in that the first extruding unit 10 in which a plurality of inner conduits 1 consisting of conduits the diameter of which is smaller than an inner diameter of outer conduits 20 of a wrinkle shape are positioned within the outer conduits 20 in a regular distance, and the second extruding unit 20 for shaping the outer conduits 2 are sequentially arranged so that a resin tube having the plurality of the inner conduits 1 can be manufactured at a time by a series of extruding processes.

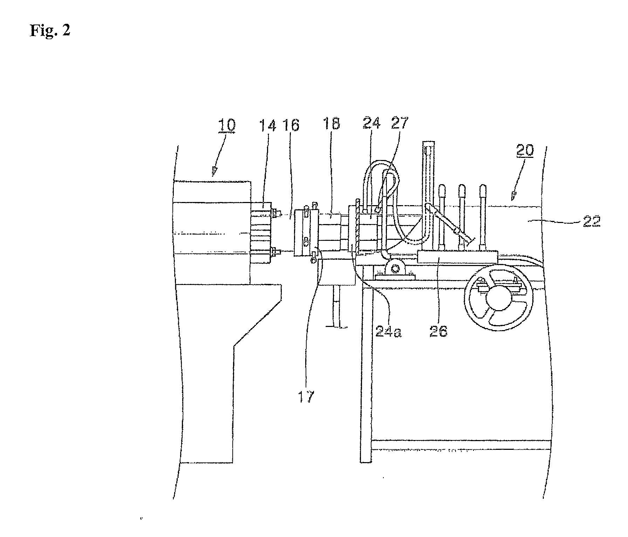

Fig. 2 is a partially extended view of the apparatus for showing a first extruding unit and a first refrigerator in Fig. 1.

The first extruding unit 10 serves to extrude raw material injected through a hopper 12 toward a head 16 of a screw case 14 to form the inner conduits.

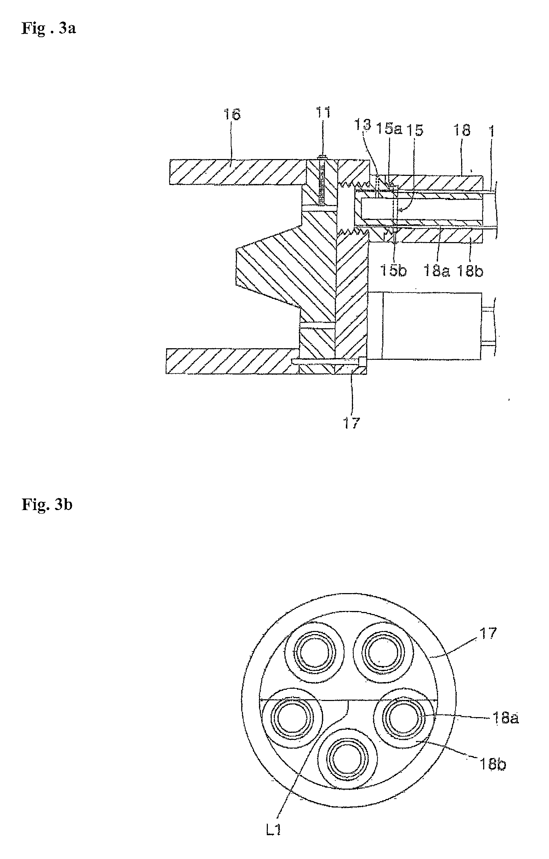

The first extruding unit 10 has at least more than one first dice 18 that are positioned within the circumference of a circle of a given width L1 for simultaneously extruding the inner conduits, as in Fig. 3a and Fig. 3b. At this time, it is preferred that the width L1 is same or smaller than the inner diameter L2 of the outer conduits 2 that is extruded through the second extruding unit 30.

In order to extrude the plurality of the inner conduits within the circumference of a circle of a given width at the same time, it is required that the dice must be positioned within the circumference of the circle having a desired width.

However, the position of a conventional de is varied in order to adjust the thickness of the resin tube or its work is not facilitated. In other words, the dice have inner and outer blocks. Thus, the dice could not be easily positioned since the thickness of the tube is controlled while the outer block is moved in all directions with the inner block stopped at a given position.

In the present invention, thickness control devices are built within the dice, respectively. Thus, the dice can be easily positioned by a simple manipulation.

In more detail, the first extruding unit 10 has the first dice 18 for extruding the inner conduits 1 that are positioned in an equal distance within the circumference of a circle of a given width L1 in the block 17 consisting of one piece or two pieces at one end of the head 16 of the screw case 14, as shown in Fig. 3b.

At this time, the first dice 18 are detachably installed in the block 17.

The first dice 18 can be separated into an inner block 18a and an outer block 18b.

A raw material is extruded into a gap between the inner and outer blocks 18a, 18b, so that desired inner conduits 1 could be extruded.

At this time, a thickness control means 15 for controlling the thickness of the inner conduits 1 when the thickness of the inner conduits are inclined toward one side is positioned at an adequate position between the inner and outer blocks 18a and 18b constituting the first dice 18.

The thickness control means 15 is installed at an outer side of an activator 15a of a ring shape movably installed at a space between the inner and outer blocks 18a and 18b, and the outer block 18b. At this time, the means 15 also has control volts 15 for moving the activator 15a in all directions.

The diameter of the activator 15a determines the outer diameter of the inner conduit 1.

Further, the block 17 also includes a flow control member 11 of a volt shape for controlling the amount of raw material. Each of the dice 18 has an air supply path 13 for maintaining an internal pressure of the inner conduit 1.

The first refrigerators 20 are consecutively installed at the rear side of the first extruding unit 10.

The first refrigerator 10 has a given length sufficient to harden the inner conduits 19 through each of the first dice 18 in the first extruding unit 10. A container 22 of a rectangular box shape is installed on an upper side of the first refrigerator 10. Standardization dice 24 for standardizing the inner conduits 1 through the dice 1 are positioned through the container 22 at the front end of the container 22 and also positioned at the same position to each of the first dice 18 in the first extruding unit 1.

Also, each of the standardization dice 24 has spray nozzles 27 for spraying refrigeration water through a thermal exchanger 26 using a coolant installed at an outer circumference wall of the container 22.

At this time, the first refrigerator 20 circulates the coolant within the container 22 and hardens the inner conduits 1 through the standardization dice 24.

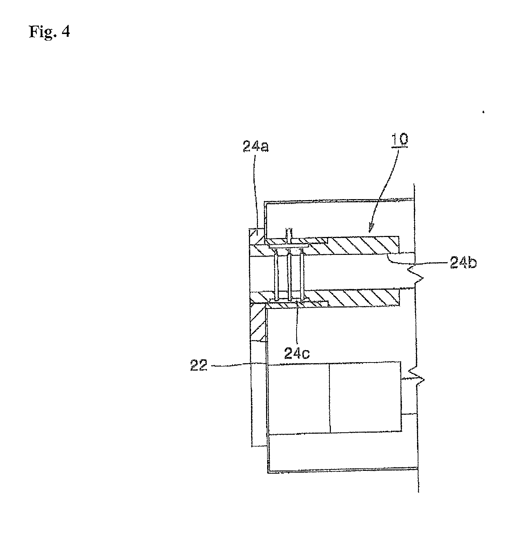

Fig. 4 is a partially cross-sectional view of the standardization dice in an inner conduit.

The standardization dice 24 have a shaping path 24b that coupled to an assembly block 24a by means of a screw that is coupled to the front end of the container 24, for standardization the dimension of an outer diameter of the inner conduit 19. The standardization dice 24 has a suction path 24c at an outer circumference of the inner conduit 1.

Further, the second extruding units 30 are positioned in parallel at one side of the first extruding unit 10 and are also positioned at the rear of the first extruding unit 20.

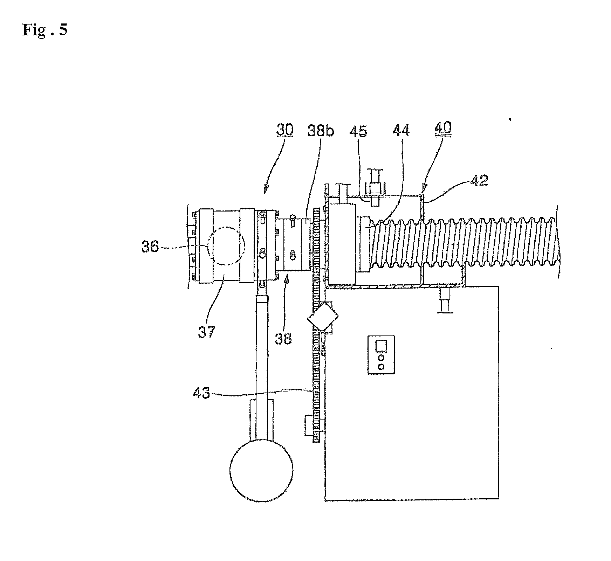

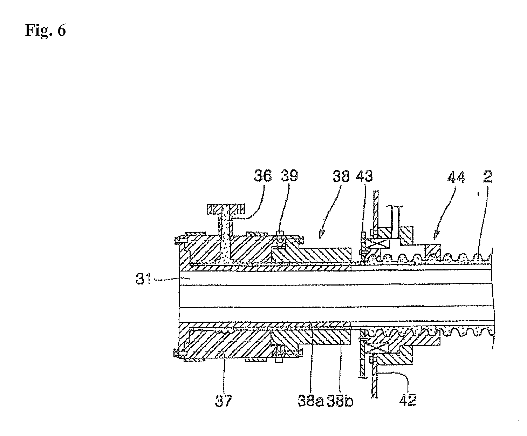

The second extruding units 30 contain the plurality of the inner conduits 1 that are extruded through the first extruding unit 10 and extrude simultaneously the outer conduits 2. The second extruding unit 30 shape the outer conduit 2 in order to extrude the raw material injected through the hopper 32 toward the head 36 of the screw case 34 as in the first extruding unit 10. Thus, the outer conduit 2 is extruded through the second dice 38 coupled to the block 37 at the end of the head 36, as in Fig. 5 and Fig. 6.

The second dice 38 includes an inner block 38a having a flow path 31 for containing the inner conduits 1 through the first extruding unit 10 with no change in position. An outer block 38b is installed around the inner block 38a with some gap. The outer conduit 29 is shaped by means of the gap between the outer block 38b and the inner block 38a. At this time, the inner diameter of the outer conduits 2 is same or greater than the circumference of a circle in which the inner conduits are collected.

At this time, the block 37 has a sucking path 37a for sucking the outer conduit 2. The outer block 38b are moved in all directions by means of the control volt 39 installed at an outer side of the block 37 so that the thickness of the outer conduits 2 is controlled. Further, a guider 60 for guiding the inner conduits 10 through the first refrigerator 20 is installed between the first refrigerator 20 and the second extruding unit 30. The guider 60 has cooling nozzles 72 for cooling.

Further, the second refrigerators 40 are consecutively installed at the rear side of the second dice 39.

The second refrigerator 40 hardens the inner conduits that are extruded through the second dice 38 of the second extruding unit 30.

The second refrigerator 40 has a container 42 of a rectangular shape having an adequate length and an upper side of which is opened.

Third dice 44 are installed to pass through from an outer side of the container 42 to an inner side of it at the container 42 and contain the outer conduits 2 extruded through the second dice 38.

The third dice 44 form a wrinkle at the main wall of the outer conduits 2 while rotating at an adequate speed from additional driving motor through the power transfer member 43.

At this time, a shaping is performed while the plurality of the inner conduits 1 are together transferred within the outer conduits 2.

Further, in the third dice 44, as the coolant within the container 42 is sprayed toward the spray nozzle 45 using a circulation pump, etc, the outer conduits 2 are hardened.

Meanwhile, hoisting means 50 of a roll mode are consecutively installed at the rear side of the third refrigerator 40.

The hoisting means 50 hoist the inner and outer conduits 1 and 2 that are shaped by a pair of rotation rolls that rotate at an adequate speed by means of additional driving motor.

The inner and outer conduits 1 and 2 passing through the hoisting means 50 are contained by additional winding means, etc.

A process of manufacturing the resin tube of the present invention will be below described.

The first extruding unit 10 first collects and extrudes the plurality of the inner conduits 1 within the circumference of a circle of a given width through the first dice 18. Thus collected inner conduits pass the second dice 38 of the second extruding unit 30 and the outer conduits 2 are simultaneously extruded on an outer circumference of the inner conduits 1, so that the inner and outer conduits 1 and 2 are simultaneously manufactured through a series of extruding process.

As above, according to the present invention, a resin tube having a plurality of inner conduits can be simultaneously manufactured through a series of consecutive extruding shaping processes. Therefore, the present invention has advantages that it allows a mass production by solving some problems in a conventional manual work. As a result, the present invention can provide a resin tube of a low cost.

Further, the present invention can provide a resin tube having an improved quality and reliability.

The present invention has been described with reference to a particular embodiment in connection with a particular application. Those having ordinary skill in the art and access to the teachings of the present invention will recognize additional modifications and applications within the scope thereof.

It is therefore intended by the appended claims to cover any and all such applications, modifications, and embodiments within the scope of the present invention.

## Claims

1. An apparatus for extruding a raw material injected via a hopper through a dice consisting of inner and outer blocks to produce a resin tube, comprising:
a first extruding unit having a plurality of first dice for shaping at least one inner conduit installed within a circumference of a given width at a head of a screw case;
first refrigerators consecutively install in the first extruding unit, for cooling the inner conduits from the first extruding unit;
a second extruding unit consecutively installed next to the first refrigerator in the head of the screw case, said second extruding unit having a containing tube for containing the plurality of the inner conduits extruded from the first extruding unit and said second extruding having a second dice for shaping an outer conduits surrounding an outer circumference of the inner conduits; and
a second refrigerator next to the second extruding unit, said second refrigerator having a third dice for shaping a wrinkle at the main wall of the outer conduits extruded through the second dice and said second refrigerator for cooling the outer conduits extruded through the second and third dice.

2. The apparatus as claimed in claim 1, further including an activator of a ring shape that is installed freely at a space between the inner and outer blocks of the first dice in order to control the thickness of the main wall of the inner conduit extruded within each of the first dice of the first extruding, and a thickness control means coupled by a screw in at least three directions in an outer side of the outer block, for moving the activator in all directions.

3. The apparatus as claimed in claim 1, wherein said dice are positioned at an equal distance within the circumference located within the outer conduits extruded through the second dice.

4. The apparatus as claimed in claim 1, further including a standardization die for standardizing an outer dimension of the inner conduits extruded through the first dice.

5. The apparatus as claimed in claim 1, wherein said first refrigerator hardens the inner conduits extruded using a coolant through a thermal exchanger using a coolant.

6. The apparatus as claimed in claim 1, further including a hoisting means for hoisting the inner and outer conduits from the first and second extruding units next to the second refrigerator.

7. The apparatus as claimed in claim 1, further including a guider for guiding the inner conduits from the first refrigerator and the first extruding unit in the second extruding unit.

8. The apparatus as claimed in claim 1, said resin tube having a plurality of inner conduits, comprising:
at least one inner conduits collected and positioned at a equal distance within the circumference of a circle of a given width through an adequate extruding process, and
outer conduits of a wrinkle shape formed around the inner conduits by means of an adequate extruding process.
